# EUROPÄISCHE PATENTSCHRIFT

(11) **EP 2 807 058 B1**
(45) Veröffentlichungstag und Bekanntmachung des Hinweises auf die Patenterteilung: **13.06.2018**
(21) Anmeldenummer: 12823135.4
(22) Anmeldetag: 19.12.2012
(51) Int. Cl.: B60R 21/215

(54) **ABDECKUNG FÜR EINEN AIRBAG**
COVER FOR AN AIRBAG
COUVERTURE POUR UN AIRBAG

(30) Priorität: 25.01.2012 DE 102012001461
(43) Veröffentlichungstag der Anmeldung: 03.12.2014
(73) Patentinhaber: K.L. Kaschier- und Laminier GmbH, 48455 Bad Bentheim-Gildehaus (DE)
(72) Erfinder: RORING, Albert, 48599 Gronau-Epe (DE)
(74) Vertreter: Cohausz Hannig Borkowski Wißgott
(86) Internationale Anmeldenummer: PCT/DE2012/001217
(87) Internationale Veröffentlichungsnummer: WO 2013/110250

(56) Entgegenhaltungen:
- DE-A1-102008 042 657
- DE-U1-202007 016 718
- DE-U1-202007 016 848
- US-A1- 2004 164 531

## Beschreibung

Die Erfindung betrifft eine Abdeckung für einen Airbag mit mindestens einem Airbagdeckel, der an dem, den Airbagdeckel umgebenden, feststehenden Abdeckungsbereich durch ein textiles Scharnier angelenkt ist, wobei der Airbagdeckel und der den Airbagdeckel umgebende Abdeckungsbereich von einem Flächenmaterial aus Kunststoff gebildet sind, dessen Rückseite ein textiles Flächenelement trägt, das Opferfäden aufweist, die zur Scharnierachse im Wesentlichen rechtwinklig verlaufen und bei Auslösen des Airbags im Bereich des Scharniers reißen, und wobei das textile Flächenelement zudem Stoppfäden aufweist, die beim Auslösen des Airbags ein Verschwenken des Airbagdeckels um die Scharnierachse zulassen, ohne im Bereich des Scharniers zu reißen, um nach dem Auslösen des Airbags den Airbagdeckel sicher zu halten.

Es ist aus der DE 20 2007 016 718 U1 bekannt, das textile Flächenelement einer Kunststoffabdeckung für einen Airbag über die gesamte Länge mit Stoppfäden zu versehen, die eine größere Länge aufweisen, um sich genügend ausdehnen zu können, wenn beim Auslösen des Airbags der den Airbag verdeckende Deckel ausschwenkt und hierbei durch die Stoppfäden festgehalten wird, damit er nicht in den Fahrgastraum hineinfliegt. Hierbei hat es sich aber gezeigt, dass für die Stoppfäden eine erhebliche Materialfadenmenge erforderlich ist. Die DE 20 2007 016 718 U1 offenbart eine Abdeckung für einen Airbag nach dem Oberbegriff von Anspruch 1. Aus der DE 10 2008 042 657 A2 ist es bekannt, zwei Opferfädenarten bei einer Airbagabdeckung anzuordnen. Nach dem Reißen der ersten Fadenart soll die zweite Fadenart die Abdeckung halten.

Aufgabe der Erfindung ist es, für die Stoppfäden eine Materialeinsparung zu erreichen, zusätzlich einen sicheren Halt des textilen Flächenelements im Kunststoff der Abdeckung zu erlangen und dafür zu sorgen, dass ein kontinuierliches zeitliches Reißen der Opferfäden nacheinander erfolgt.

Diese Aufgabe wird erfindungsgemäß dadurch gelöst,
- dass nur im Bereich des Scharniers die nicht reißenden Stoppfäden wellen-und/oder schlaufenförmig verdichtet angeordnet sind und damit dort eine größere Länge aufweisen als in den Bereichen außerhalb des Scharniers,
- dass der wellen- und/oder schlaufenförmig verdichtete Bereich sich in der Ebene des textilen Flächenelements befindet, und
- dass drei oder mehr unterschiedliche Arten von Opferfäden im textilen Flächenelement bestehen mit unterschiedlicher Länge und/oder Stärke, und die Opferfadenarten beim Öffnen zeitlich nacheinander reißen.

Hierdurch ist sichergestellt, dass es nicht zu einem Reißen aller Stoppfäden/Opferfäden im gleichen Moment kommt, sondern zu einem Reißen innerhalb eines Zeitraumes nacheinander. Dies führt auch zu einer schnelleren Rotationsbewegung des Deckels.

Hierzu wird auch vorgeschlagen, dass die nicht reißenden Stoppfäden in den Bereichen außerhalb des Scharniers im Wesentlichen gerade verlaufen und zwischen den einzelnen Stoppfäden so große Zwischenräume bilden, dass das Kunststoffmaterial des Abdeckungsbereichs in diesen Zwischenräumen Halt findet.

So wird sowohl ein besserer Halt des textilen Flächenelements im Kunststoff des Flächenmaterials der Abdeckung erreicht als auch eine Materialeinsparung erzielt, da der Fadenverbrauch für die Stoppfäden außerhalb des Scharnierbereichs wesentlich geringer ist.

Damit sind die nicht reißenden Stoppfäden nur im Bereich des Scharniers verdichtet angeordnet und dagegen außerhalb des Scharniers bzw. des Scharnierbereichs in nicht verdichteter Form vorgesehen, so dass außerhalb des Scharnierbereichs die Stoppfäden und damit auch das textile Flächenelement sicher im Kunststoff gehalten sind.

Vorzugsweise wird hierbei vorgeschlagen, dass im Bereich des Scharniers die Stoppfäden innerhalb des textilen Flächenelements einen den Scharnierbereich überdeckenden schmalen, zur Scharnierachse parallelen Streifen hoher Fadendichte bilden.

Besonders vorteilhaft ist es, wenn die Stoppfäden in regelmäßigen Abständen schmale, zueinander parallele Streifen hoher Dichte bilden und der Bereich des textilen Flächenelements zwischen den Streifen hoher Dichte eine Trennstelle aufweisen. Damit kann ein textiles Flächenelement als Bahnenware für mehrere Airbagabdeckungen hergestellt werden und es brauchen nur nach der Stellung die Bahnenware in einzelne Abschnitte unterteilt zu werden für jeweils eine Airbagabdeckung.

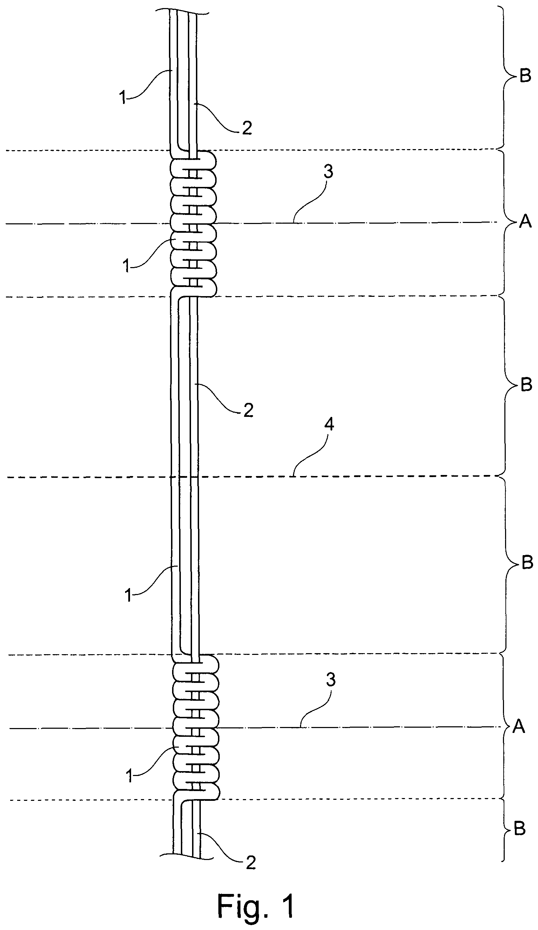

Ein Ausführungsbeispiel der Erfindung ist in der Zeichnung schematisch dargestellt und wird im Folgenden näher beschrieben.

Die Abdeckung eines Airbags mit mindestens einem Airbagdeckel besteht aus einem plattenförmigen Kunststoffmaterial, auf dessen Rückseite ein textiles Flächenelement eingeschmolzen ist, das aus einem textilen Gewirke besteht, mit zusätzlichen Stoppfäden 1 und Opferfäden 2 innerhalb des textilen Flächenelements.

Die schematische Darstellung zeigt nur einen einzigen Stoppfaden 1, mit daneben liegendem Opferfaden 2 gleicher Erstreckungsrichtung, wobei die übrigen Fäden der Textilie nicht dargestellt sind. Die Achse 3 des Scharniers liegt rechtwinklig zur Erstreckungsrichtung der Fäden 1 und 2 und beidseitig und in der Scharnierachse 3 befindet sich der Scharnierbereich A. Außerhalb des Scharnierbereichs A ist der Bereich des textilen Flächenelements mit B bezeichnet.

Im Scharnierbereich A laufen die Opferfäden 2 im Wesentlichen unverändert und unverdichtet quer zur Scharnierachse 3 im Wesentlichen gerade weiter, während die Stoppfäden im Scharnierbereich verdichtet angeordnet sind, d. h. sie haben dort eine wesentlich größere Länge als die Opferfäden 2. Das Verdichten der Stoppfäden 1 wird dadurch erreicht, dass sie wellenförmig oder schlaufenförmig im Scharnierbereich A angeordnet sind. Unter Wellen und Schlaufen werden aber auch schlangenförmige, mäanderförmige, schraubenförmige oder wickelförmige Formen des Stoppfadens 1 verstanden.

In den zwischen den Scharnierbereichen liegenden Bereichen B verlaufen die Stoppfäden 1 dagegen im Wesentlichen unverdichtet und damit im Wesentlichen parallel zu den Opferfäden 2 gerade, so dass in den Bereichen B außerhalb des Scharnierbereichs A die Stoppfäden weniger dicht liegen und damit das Kunststoffmaterial der Abdeckung zwischen die Fäden besser gelangt und dort das textile Flächenelement im Kunststoff besser haftet.

Vorzugsweise wird das textile Flächenelement als Bahnenware hergestellt mit vielen Bereichen A und B quer zur Bahnenlängsrichtung immer wieder aufeinanderfolgend, so dass die Bahnenware nach ihrer Herstellung in einzelne Abschnitte getrennt wird (Trennlinie 4), wobei jeder Abschnitt für einen Airbag Verwendung findet.

In der schematischen Zeichnung ist der Opferfaden 2 in der Weise dargestellt, dass er die vom Stoppfaden 1 im Scharnierbereich A gebildeten Wellen durchdringt. Stattdessen kann der Opferfaden aber auch seitlich des verdichteten Bereichs des Stoppfadens oder über oder unter diesem Bereich liegen.

Bei einer weiteren Ausführung sind unterschiedliche Arten von Opferfäden 2 in dem textilen Flächenelement angeordnet. So besteht neben den zuerst reißenden Opferfäden mindestens eine weitere Art von Opferfäden, die aufgrund ihrer größeren Stärke und/oder größeren Länge später reißen. Es können hierbei sogar drei oder mehr Arten nebeneinander im Flächenelement angeordnet sein, die in ihrer Stärke und/oder Länge von Art zu Art zunehmen, so dass ein kontinuierliches zeitliches Reißen nacheinander erfolgt.

## Patentansprüche

1. Abdeckung für einen Airbag mit mindestens einem Airbagdeckel, der an dem, den Airbagdeckel umgebenden, feststehenden Abdeckungsbereich durch ein textiles Scharnier angelenkt ist, wobei der Airbagdeckel und der den Airbagdeckel umgebende Abdeckungsbereich von einem Flächenmaterial aus Kunststoff gebildet sind, dessen Rückseite ein textiles Flächenelement trägt, das Opferfäden (2) aufweist, die zur Scharnierachse im Wesentlichen rechtwinklig verlaufen und bei Auslösen des Airbags im Bereich des Scharniers reißen, und wobei das textile Flächenelement zudem Stoppfäden (1) aufweist, die beim Auslösen des Airbags ein Verschwenken des Airbagdeckels um die Scharnierachse (3) zulassen, ohne im Bereich (A) des Scharniers zu reißen, um nach dem Auslösen des Airbags den Airbagdeckel sicher zu halten, wobei
- nur im Bereich (A) des Scharniers die nicht reißenden Stoppfäden (1) wellen- und/oder schlaufenförmig verdichtet angeordnet sind und damit dort eine größere Länge aufweisen als in den Bereichen (B) außerhalb des Scharniers, und wobei
- der wellen- und/oder schlaufenförmig verdichtete Bereich sich in der Ebene des textilen Flächenelements befindet, **dadurch gekennzeichnet**
- **dass** drei oder mehr unterschiedliche Arten von Opferfäden (2) im textilen Flächenelement bestehen mit unterschiedlicher Länge und/oder Stärke, und die Opferfadenarten beim Öffnen zeitlich nacheinander reißen.

2. Abdeckung nach Anspruch **1,dadurch gekennzeichnet, dass** die nicht reißenden Stoppfäden (1) in den Bereichen (B) außerhalb des Scharniers im Wesentlichen gerade verlaufen und zwischen den einzelnen Stoppfäden (1) so große Zwischenräume bilden, dass das Kunststoffmaterial des Abdeckungsbereichs in diesen Zwischenräumen Halt findet.

3. Abdeckung nach Anspruch 1 oder 2, **dadurch gekennzeichnet, dass** im Bereich (A) des Scharniers die Stoppfäden (1) innerhalb des textilen Flächenelements einen den Scharnierbereich (A) überdeckenden schmalen, zur Scharnierachse (3) parallelen Streifen hoher Fadendichte bilden.

4. Textiles Flächenelement für mehrere Airbagabdeckungen nach einem der vorherigen Ansprüche, **dadurch gekennzeichnet, dass** die Stoppfäden (1) in regelmäßigen Abständen schmale, zueinander parallele Streifen (A) hoher Dichte bilden, die quer zur Längsrichtung der als Bahnenware ausgelegten textilen Flächenelements angeordnet sind, und dass die Bereiche (B) des textilen Flächenelements zwischen den Streifen (A) hoher Dichte jeweils eine Trennstelle (4) aufweisen, in den die Bahnenware in einzelne Abschnitte mit jeweils einem Streifen (A) hoher Dichte trennbar ist.

## Claims

1. Cover for an airbag, having at least one airbag lid which on the stationary cover region that surrounds the airbag lid is articulated by a textile hinge, wherein the airbag lid and the cover region surrounding the airbag lid are formed by a planar material from plastics, the rear side of said planar material supporting a textile planar element which has sacrificial threads (2) which run in a substantially orthogonal manner to the hinge axis and when the airbag is triggered rupture in the region of the hinge, and wherein the textile planar element moreover has stop threads (1) which when the airbag is triggered permits pivoting of the airbag lid about the hinge axis (3) without rupturing in the region (A) of the hinge, so as to securely hold the airbag lid after the airbag has been triggered, wherein the non-rupturing stop threads (1) are disposed so as to be compressed in a wave-shaped and/or loop-shaped manner only in the region (A) of the hinge and thus have a greater length therein than in the regions (B) outside the hinge, and wherein the region compressed in a wave-shaped and/or loop-shaped manner is located in the plane of the textile planar element,
**characterized in that**
three or more different types of sacrificial threads (2) of dissimilar lengths and/or thicknesses exist in the textile planar element, and the sacrificial thread types when opened rupture in a temporally sequential manner.

2. Cover according to Claim 1,
**characterized in that**
the non-rupturing stop threads (1) in the regions (B) outside the hinge run in a substantially straight manner and between the individual stop threads (1) form intermediate spaces that are so large that the plastics material of the cover region gains a hold in said intermediate spaces.

3. Cover according to Claim 1 or 2,
**characterized in that**
the stop threads (1) in the region (A) of the hinge within the textile planar element form a narrow strip of high thread density that covers the hinge region (A) and is parallel with the hinge axis (3).

4. Textile planar element for a plurality of airbag covers according to one of the preceding claims, **characterized in that**
the stop threads (1) at regular spacings form narrow, mutually parallel strips (A) of high-density which are disposed transversely to the longitudinal direction of the textile planar element that is laid out as a web material, and **in that** the regions (B) of the textile planar element between the strips (A) of high-density have in each case one separation location (4) at which the web material is separable into individual portions having in each case one strip (A) of high-density.

## Revendications

1. Couverture pour un airbag comprenant au moins un couvercle d'airbag qui est articulé à la région de couverture fixe entourant le couvercle d'airbag par une charnière textile, le couvercle d'airbag et la région de couverture entourant le couvercle d'airbag étant formés d'une matière en nappe en plastique dont le côté arrière porte un élément en nappe textile qui présente des fils sacrificiels (2) qui s'étendent essentiellement à angle droit par rapport à l'axe de charnière et qui se déchirent lors du déclenchement de l'airbag dans la région de la charnière, et l'élément en nappe textile présentant en outre des fils d'arrêt (1) qui, lors du déclenchement de l'airbag, permettent un pivotement du couvercle d'airbag autour de l'axe de charnière (3) sans se déchirer dans la région (A) de la charnière afin de retenir le couvercle d'airbag après le déclenchement de l'airbag,
- les fils d'arrêt (1) qui ne se déchirent pas étant disposés de manière condensée en forme ondulée et/ou en boucle dans la région (A) de la charnière et présentant ainsi à cet endroit une plus grande longueur que dans les régions (B) à l'extérieur de la charnière, et
- la région condensée en forme ondulée et/ou en boucle se trouvant dans le plan de l'élément en nappe textile,
**caractérisée en ce que**
- trois ou plus de trois types différents de fils sacrificiels (2) sont prévus dans l'élément en nappe textile, avec une longueur et/ou une solidité différente et les types de fils sacrificiels se déchirent les uns après les autres lors de l'ouverture.

2. Couverture selon la revendication 1, **caractérisée en ce que** les fils d'arrêt (1) qui ne se déchirent pas s'étendent essentiellement en ligne droite dans les régions (B) à l'extérieur de la charnière et forment entre les fils d'arrêt individuels (1) des espaces intermédiaires suffisamment grands pour que la matière plastique de la région de couverture trouve une prise dans ces espaces intermédiaires.

3. Couverture selon la revendication 1 ou 2, **caractérisée en ce que** dans la région (A) de la charnière, les fils d'arrêt (1) forment à l'intérieur de l'élément en nappe textile un ruban étroit de grande densité de fils, parallèle à l'axe de charnière (3), recouvrant la région de charnière (A).

4. Élément en nappe textile pour plusieurs couvertures d'airbag selon l'une quelconque des revendications précédentes, **caractérisé en ce que** les fils d'arrêt (1) forment, à intervalles réguliers, des rubans (A) étroits de grande densité parallèles les uns aux autres qui sont disposés transversalement à la direction longitudinale de l'élément en nappe textile réalisé sous forme de produit en bande, et **en ce que** les régions (B) de l'élément en nappe textile présentent, entre les rubans (A) de grande densité, à chaque fois une zone de séparation (4) dans laquelle le produit en bande peut être séparé en portions individuelles comprenant chacune un ruban (A) de grande densité.
